# EUROPÄISCHE PATENTANMELDUNG

(11) **EP 1 132 222 A2**
(43) Veröffentlichungstag der Anmeldung: **12.09.2001**
(21) Anmeldenummer: 01105222.2
(22) Anmeldetag: 03.03.2001
(51) Int. Cl.: B60G 9/02, B60B 35/12

(54) **Gefederte, lenkbare Radachse**

(30) Priorität: 11.03.2000 DE 10011955
(71) Anmelder: ZF FRIEDRICHSHAFEN Aktiengesellschaft, 88038 Friedrichshafen (DE)
(72) Erfinder: Krieg, Gerhard, 94136 Zwecking (DE); Wittkowski, Günther, 94107 Untergriesbach (DE)
(74) Vertreter: Zietlow, Karl-Peter

(57) **Zusammenfassung**

Die Erfindung geht von einer gefederten, lenkbare Radachse mit einem Achskörper aus, der an seiner Rückseite mit einem deichselartigen Schublenker (1) starr verbunden ist, der zentrisch zur Quermittelebene des Achskörpers an seinem dem Achskörper abgewandten Ende (17) an einem Fahrgestell eines Fahrzeugs in einem sphärischen Gelenk (5) derart geführt ist, dass der Achskörper eine horizontale und vertikale Schwenkbewegung zum Fahrgestell und eine Pendelbewegung um die Längsachse (3) des Schublenkers (1) ausführen kann.
Es wird vorgeschlagen, dass das sphärische Gelenk (5) ein Molekulargelenk ist, dessen Lagergehäuse (10) über einen Flansch (8) an einer Montagefläche (9) einer Konsole (6) verschraubt ist, die am Schublenker (1) angeformt ist. Dadurch wird eine kostengünstige, wartungsfreie Anbindung des Schublenkers (1) an das Fahrgestell erreicht. Ferner werden Stöße nur gedämpft vom Schublenker (1) auf das Fahrgestell übertragen.

## Beschreibung

Die Erfindung betrifft eine gefederte, lenkbare Radachse nach dem Oberbegriff von Anspruch 1.

Aus der EP 0 400 033 B1 ist eine lenkbare Radachse eines Schleppers bekannt. Diese ist die Vorderachse des Fahrzeugs und weist zum Fahrzeuginneren hin einen starr mit einem Achskörper der Radachse verbundenen rohrförmigen Schublenker auf, der an seinem dem Achskörper abgewandten Ende mittels eines Kugelgelenks allseitig frei drehbar am Fahrgestell geführt ist. Die Radachse ist mittels Federdämpferelementen gegenüber dem Fahrgestell abgefedert, indem die Federdämpferelemente gelenkig mit dem Fahrgestell und der Mitte des Achskörpers verbunden sind. Dieser nimmt an seinen Achsschenkeln schwenkbare Radköpfe auf, an denen Räder montiert sind. An jedem der Radköpfe greift ein Spurhebel an, wobei jeder der Spurhebel über eine geteilte Spurstange mit einem Drehhebel eines Drehantriebs einer Lenkeinrichtung verbunden ist. Das Fahrgestell und der Achskörper sind weiterhin mittels einer Seitenführungsstrebe zueinander geführt, die am Fahrgestell und am Drehhebel angelenkt ist. Der Schublenker dient als Längskraftabstützung der Radachse und nimmt die von der Rädern auf die Radachse übertragenden Anfahr- und Bremsmomente auf und leitet sie über das Kugelgelenk in das Fahrgestell.

Gemäß einem Ausführungsbeispiel kann die Radachse auch ungefedert am Fahrgestell aufgehängt sein. Dabei ist der Achskörper ebenfalls starr mit einem Schublenker verbunden, der über ein Kugelgelenk am Fahrgestell geführt ist. In Verlängerung des Schublenkers greift an der zum Fahrzeug äußeren Seite des Fahrzeugs ein vertikaler Lenker an, der jeweils gelenkig mit dem Fahrgestell und mit dem Achskörper verbunden ist. Die Radachse weist ferner eine einstückig ausgebildete Spurstange auf, die an Spurhebeln beider Radköpfe angelenkt ist. Einer der Spurhebel steht mit einem doppel wirkenden Zylinder in Verbindung, während zwischen dem anderen Spurhebel und dem Fahrgestell eine Seitenführungsstrebe angeordnet ist. Da der Achskörper gegenüber dem Fahrgestell ungefedert ist, schwenkt der Schublenker im Kugelgelenk lediglich in einer horizontalen Ebene.

Aus der DE 196 21 519 A1 ist eine ähnliche gefederte Radachse bekannt, bei der ein Panhardstab und ein Hydraulikzylinder in einer Weise angeordnet und am Fahrgestell sowie am Achskörper befestigt sind, dass der Achskörper bezüglich des Fahrgestells pendeln kann. Hierbei schneidet der horizontal liegende Panhardstab mit seiner Mittelachse den Hydraulikzylinder bezüglich der Fahrzeugbreite in der Fahrzeugmitte. Der Kreuzungspunkt des Hydraulikzylinders und des Panhardstabs legt die ungefähre Lage des Pendelpols fest. Für vierrädrige landwirtschaftliche Nutzfahrzeuge ist es sinnvoll, mindestens eine Achse als Pendelachse auszubilden, damit das Fahrzeug im unebenen Gelände auf vier Rädern aufliegt. Wird nur eine Radachse als Pendelachse ausgebildet, so ist dieses in der Regel die Vorderachse. Bei dem rauen Offroadbetrieb von landwirtschaftlich genutzten Fahrzeugen treten hohe Spitzenbelastungen auf, die das Kugelgelenk stark beanspruchen, insbesondere wenn die Radachse als gefederte, lenkbare Pendelachse ausgebildet ist.

Es sind ferner handelsübliche Molekulargelenke bekannt, bei denen ein innerer Lagerkörper mit einer sphärischen Oberfläche über ein gummielastisches Element mit einem äußeren Gelenkteil verbunden ist. Auf Grund des gummielastischen Elements, das in der Regel unter Vorspannung montiert ist, können die Gelenkteile zueinander Schwenkbewegungen in allen Richtungen ausführen.

Der Erfindung liegt die Aufgabe zugrunde, den Schublenker mit wenig Aufwand und wartungsfrei am Fahrgestell anzulenken. Sie wird gemäß der Erfindung durch die Merkmale des Anspruchs 1 gelöst. Weitere Ausgestaltungen ergeben sich aus den Unteransprüchen.

Nach der Erfindung ist das sphärische Gelenk ein Molekulargelenk, dessen Lagergehäuse über einen Flansch an einer Montagefläche einer Konsole verschraubt ist, die am Schublenker angeformt ist. Das Molekulargelenk ist auf Grund seines gummielastischen Elements wartungsfrei. Außerdem ist es kostengünstig, da es als Standardbauteil mit geringen Anpassungen bezogen werden kann. Ferner werden Spitzenbelastungen durch Stöße von dem gummielastischen Element aufgenommen und gedämpft auf das Fahrgestell übertragen. Schließlich erzeugt das gummielastische Element beim Einpendeln der Radachse Rückstellkräfte, die die Stabilität des Fahrzeugs verbessern.

Die Längskräfte und Reaktionskräfte werden über die Konsole, die am Schublenker angeformt ist, sicher in den Schublenker eingeleitet, wobei zweckmäßigerweise die Montagefläche quer zur Längsachse des Schublenkers verläuft und zum freien Ende des Schublenkers weist. Hierdurch wird neben einer großen Festigkeit und Stabilität eine geringe Bauhöhe erreicht. Die Bauhöhe kann ferner dadurch optimiert werden, dass der Schublenker als Schubrohr ausgebildet ist, dessen Querschnitt sich zum Molekulargelenk hin verjüngt und zum Anschlußflansch am freien Ende hin erweitert. Der durch die Außenkontur des Schubrohrs gebildete konkave Knick kann für die Anordnung der Konsole und des Molekulargelenks zum Teil genutzt werden.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Es zeigen:
- Fig. 1: eine teilweise Seitenansicht eines Schublenkers mit einem Molekulargelenk und
- Fig. 2: eine Ansicht entsprechend einem Pfeil II in Fig. 1.

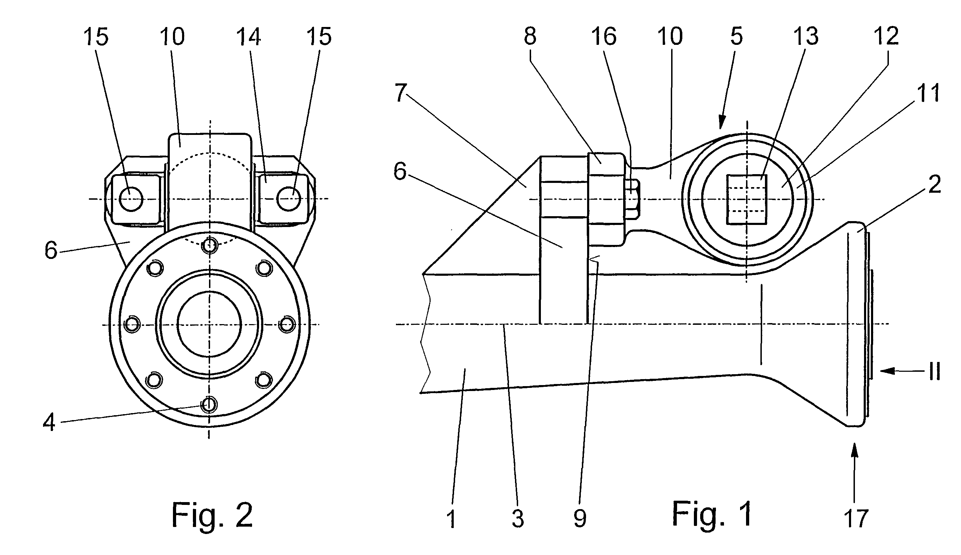

Fig. 1 zeigt ein fahrzeugseitiges Ende 17 eines Schublenkers 1, der als Schubrohr ausgebildet ist und an dem freien Ende 17 einen Anschlußflansch 2 aufweist, an den über Schraubenlöcher 4 weitere Bauelemente angeschlossen werden können. Am Schubrohr 1, dessen Längsachse mit 3 bezeichnet ist, ist eine Konsole 6 angeformt, die über Stützwinkel 7 in Richtung eines nicht näher dargestellten Achskörpers abgestützt ist. Auf der den Stützwinkeln 7 gegenüberliegenden Seite der Konsole 6 befindet sich eine Montagefläche 9, an der ein Molekulargelenk 5 über einen Flansch 8 seines Lagergehäuses 10 mittels Schrauben 16 angeschraubt ist.

In das Lagergehäuse 10 ist ein Lagerkörper 12 mit einer sphärischen Oberfläche eingesetzt und über ein gummielastisches Element 11 mit einer im Lagergehäuse 10 fest verbundenen Lagerschale verbunden. Der Lagerkörper 12 wird in das Lagergehäuse 10 in der Regel so montiert, dass das gummielastische Element 11 unter einer vorgegebenen Vorspannung steht.

Der Lagerkörper 12 besitzt eine polygonale Querbohrung 13, in die ein Bolzen 14 gesteckt ist, der zu beiden Seiten des Lagergehäuses Löcher 15 aufweist, die zum Befestigen an einem nicht näher dargestellten Fahrgestell eines Fahrzeugs dienen. Das gummielastische Element 11 ermöglicht dem Lagerkörper 12 eine begrenzte Schwenkbewegung in allen Richtungen, so dass der Schublenker 1 um das Molekulargelenk 5 horizontal und vertikal schwenken und um die Längsachse 3 pendeln kann. Dabei werden Rückstellkräfte erzeugt, die das Rückstellen des Achskörpers und des Schublenkers 1 in die Ausgangslage unterstützen und damit die Stabilität des Fahrzeugs verbessern. Ferner dämpft das gummielastische Element 11 Spitzenbelastungen, so dass sie nur gedämpft auf das Fahrgestell übertragen werden. Hierdurch wird sowohl die Lebensdauer der Verbindung zwischen dem Schublenker 1 und dem Fahrgestell verbessert als auch der Komfort erhöht.

Der Querschnitt des Schublenkers 1, der als Schubrohr ausgebildet ist, verjüngt sich in Richtung des Molekulargelenks 5 und erweitert sich dann wieder in Richtung des Anschlußflansches 2 am freien Ende 17. Dadurch passt sich das Lagergehäuse 10 der äußeren Kontur des Schublenkers 1 günstig an und beansprucht mit der Konsole 6 nur wenig Bauhöhe.

### Bezugszeichen

- 1: Schublenker
- 2: Anschlußflansch
- 3: Längsachse
- 4: Schraubenloch
- 5: Molekulargelenk
- 6: Konsole
- 7: Stützwinkel
- 8: Flansch
- 9: Montagefläche
- 10: Lagergehäuse
- 11: gummielastisches Element
- 12: Lagerkörper
- 13: Querbohrung
- 14: Bolzen
- 15: Loch
- 16: Schraube
- 17: Ende

## Patentansprüche

1. Gefederte, lenkbare Radachse mit einem Achskörper, der an seiner Rückseite mit einem deichselartigen Schublenker (1) starr verbunden ist, der zentrisch zur Quermittelebene des Achskörpers an seinem dem Achskörper abgewandten Ende (17) an einem Fahrgestell eines Fahrzeugs in einem sphärischen Gelenk (5) derart geführt ist, dass der Achskörper eine horizontale und vertikale Schwenkbewegung zum Fahrgestell und eine Pendelbewegung um die Längsachse (3) des Schublenkers (1) ausführen kann, **dadurch gekennzeichnet,** dass das sphärische Gelenk (5) ein Molekulargelenk ist, dessen Lagergehäuse (10) über einen Flansch (8) an einer Montagefläche (9) einer Konsole (6) verschraubt ist, die am Schublenker (1) angeformt ist.

2. Radachse nach Anspruch 1, **dadurch gekennzeichnet,** dass die Montagefläche (9) quer zur Längsachse (3) des Schublenkers (1) verläuft und zum freien Ende (17) des Schublenkers (1) weist.

3. Radachse nach Anspruch 1 oder 2, **dadurch gekennzeichnet,** dass im Lagergehäuse (10) ein Lagerkörper (12) mit einer sphärischen Oberfläche über ein gummielastisches Element (11) mit einer gehäusefesten Lagerschale verbunden ist, wobei der Lagerkörper (12) eine polygonale Querbohrung (13) aufweist, in die ein Bolzen (14) mit einem entsprechenden Querschnittprofil zum Befestigen an dem Fahrgestell eingesetzt ist.

4. Radachse nach einem der vorhergehenden Ansprüche, **dadurch gekennzeichnet**, dass der Schublenker (1) als Schubrohr ausgebildet ist, dessen Querschnitt sich zum Molekulargelenk (5) hin verjüngt und zum Anschlußflansch (2) am freien Ende (17) hin erweitert.
